(19) Europäisches Patentamt

European Patent Office

Office européen des brevets

(11) Veröffentlichungsnummer: **0 494 657 A2**

(12) # EUROPÄISCHE PATENTANMELDUNG

(21) Anmeldenummer: **92100202.8**

(51) Int. Cl.⁵: **B60N 2/00**

(22) Anmeldetag: **08.01.92**

(30) Priorität: **08.01.91 DE 9100149 U**

(43) Veröffentlichungstag der Anmeldung:
**15.07.92 Patentblatt 92/29**

(84) Benannte Vertragsstaaten:
**DE ES FR GB IT**

(71) Anmelder: **Mohl, Rolf-Dieter**
**Birkenweg 33**
**W-7420 Dottingen(DE)**

(72) Erfinder: **Mohl, Rolf-Dieter**
**Birkenweg 33**
**W-7420 Dottingen(DE)**

(74) Vertreter: **Finsterwald, Manfred, Dipl.-Ing.,**
**Dipl.-Wirtsch.-Ing. et al**
**Manitz, Finsterwald, Rotermund & Heyn,**
**Robert-Koch-Strasse 1**
**W-8000 München 22(DE)**

(54) **Fahrzeugsitzanordnung.**

(57) Es wird eine Fahrzeugsitzanordnung für Omnibusse beschrieben mit zumindest einer, jeweils aus zumindest zwei nebeneinanderliegenden Sitzen bestehenden Sitzreihe, wobei die nebeneinanderliegenden Sitze in Querrichtung relativ zueinander verschiebbar sind.

Die Erfindung betrifft eine Fahrzeugsitzanordnung insbesondere für Omnibusse, mit zumindest einer, jeweils aus zumindest zwei nebeneinanderliegenden Sitzen bestehenden Sitzreihe, wobei die nebeneinanderliegenden Sitze in Querrichtung relativ zueinander verschiebbar sind.

Derartige Fahrzeugsitzanordnungen sind insbesondere in Reise-Omnibussen vorgesehen. Üblicherweise sind dabei die dem Mittelgang des Omnibusses benachbarten Sitze in Querrichtung verschiebbar und die fensterseitigen Sitze fest bezüglich des Fahrzeugbodens angeordnet. Die zum Mittelgang hin sitzenden Fahrgäste können zur Erzielung eines größeren Seitenabstandes zum Nachbarsitz hin einen Arretierhebel am Sitz betätigen und dann den Sitz durch Körperkraft um einige Zentimeter in den Mittelgang hineinschieben. Einerseits entsteht durch diese Querverschiebung der Sitze eine komfortablere Sitzbreite für die Fahrzeuggäste, andererseits jedoch wird dadurch der Mittelgang sehr eingeengt, so daß oftmals nur eine Gangbreite von etwa 20 cm verbleibt.

Beim Aussteigen und insbesondere beim fluchtartigen Verlassen des Fahrzeugs, beispielsweise nach einem Unfall, ist diese geringe Gangbreite nicht mehr ausreichend, um ein gefahrloses Aussteigen zu ermöglichen.

Es ist daher die Aufgabe der vorliegenden Erfindung, eine Fahrzeugsitzanordnung der eingangs genannten Gattung so weiterzubilden, daß ein sicheres und reibungsloses Aussteigen der Fahrgäste auch im Falle einer Panik unter den Fahrgästen möglich ist.

Diese Aufgabe wird bei der Erfindung dadurch gelöst, daß für jeden verschiebbaren Sitz eine Antriebseinrichtung zur Betätigung der Querverschiebung vorgesehen ist.

Die Antriebseinrichtung ermöglicht nicht nur dem Fahrgast ein bequemes und einfaches seitliches Verschieben des Sitzes ohne den Einsatz der eigenen Körperkraft, sondern gewährleistet auch das sichere Zurückstellen des Sitzes, wenn die Körperkraft des Fahrgastes, beispielsweise durch Verletzung oder durch extreme Schräglage des Fahrzeugs nicht mehr für ein Zurückverschieben des Sitzes ausreicht.

Besonders vorteilhaft ist das Vorsehen der erfindungsgemäßen Antriebseinrichtung nach Anspruch 2 bei bekannten Fahrzeugsitzanordnungen, bei denen beispielsweise die fensterseitigen Sitze eines Omnibusses fest bezüglich des Fahrzeugbodens sind und die zum Mittelgang des Fahrzeugs hingewandten Sitze querverschiebbar sind. Die Ausgestaltung nach Anspruch 2 erlaubt auch ein Nachrüsten bereits existierender, manuell verstellbarer Fahrzeugsitzanordnungen mit dem erfindungsgemäßen Antrieb.

Besonders vorteilhaft ist die Ausgestaltung der Antriebseinrichtung nach Anspruch 3, wobei die im Fahrzeug für andere Zwecke, beispielsweise zur Türbetätigung, erzeugte Druckluft mitgenutzt werden kann. Vorteilhaft ist auch der elektromotorische Antrieb nach Anspruch 4, insbesondere für den Fall, daß keine Druckluft im Fahrzeug zur Verfügung steht oder daß die Querverschiebung besonders sanft durchgeführt werden soll. Die Betätigung der Antriebseinrichtung mittels eines Hydraulikmotors nach Anspruch 5 erlaubt das Aufbringen großer Verschiebekräfte und in Verbindung mit einem Getriebe gleichzeitig sanfte Beschleunigungen.

Die Ausgestaltung nach Anspruch 6 gewährleistet bei Ausfall der Antriebseinrichtung, wie dies beispielsweise bei einem Unfall geschehen kann, die Rückstellung der Sitze durch Federkraft.

Das Vorsehen einer zentralen Betätigungseinrichtung nach Anspruch 7 gestattet dem Fahrer oder einer anderen Bedienperson, die Querverschiebung aller Sitze oder zumindest von Gruppen von Sitzen zu steuern, so daß der Fahrer beispielsweise nach dem Einsteigen der Fahrgäste die Sitze in die auseinandergefahrene Reisestellung und / oder vor dem Aussteigen der Fahrgäste in die aufeinanderzugefahrene Ein- und Ausstiegsstellung bewegen kann. Auf diese Weise kann der Fahrer auch im Falle eines Unfalls dafür sorgen, daß der Mittelgang wieder schnellstmöglich seine volle Breite erreicht, um ein schnelles Aussteigen der Fahrgäste zu ermöglichen.

Das Vorsehen einer individuellen Betätigungseinrichtung nach Anspruch 8 erlaubt darüber hinaus dem Fahrgast selbst, Einfluß auf die seitliche Verschiebung des Sitzes auszuüben.

Die automatische Notfallbetätigungseinrichtung nach Anspruch 9 gewährleistet, daß auch in dem Fall, in dem der Fahrer nach einem Unfall nicht in der Lage ist, die Sitze zurückzustellen, automatisch eine Rückstellung der Sitze und damit ein Freiwerden des Mittelgangs erfolgt. Diese automatische Notfallbetätigungseinrichtung kann beispielsweise durch einen Unfall- oder Crash-Sensor ausgelöst werden, der auf bei einem Unfall auftretende hohe Stoßbelastungen reagiert.

Das Vorsehen von zumindest einer manuellen Notfallbetätigungseinrichtung im Fahrgastraum im Anspruch 10 erlaubt auch den Fahrgästen im Falle eines Unfalles, die Rückstellung der Sitze zentral zu bewirken. Die manuelle Notfallbetätigungseinrichtung kann beispielsweise mit der Notbetätigung für die Türen derart gekoppelt sein, daß durch die in die zur Betätigung der Türen dienenden Kolben-Zylinder-Einheiten abfließende Druckluft der Druck in den zur Betätigung der Antriebseinrichtungen dienenden sitzseitigen Kolben-Zylinder-Einheiten unter einen Wert fällt, der es der nach Anspruch 6 vorgesehenen Zugfeder erlaubt, die Sitze zurückzufahren.

Die nach Anspruch 11 vorgesehene Prioritätsfolge der Betätigungseinrichtungen erhöht die Sicherheit vor Fehlbedienungen.

Die Erfindung wird nachfolgend anhand eines Beispiels unter Bezugnahme auf die Zeichnung näher erläutert; in dieser zeigt:

Figur 1 eine Sitzanordnung in einem Personentransport-Fahrzeug,

Figur 2 eine teilweise geschnittene Darstellung eines relativ zueinander verschiebbaren Sitzpaares nach der Erfindung und

Figur 3 die schematische Anordnung von Steuerventilen einer erfindungsgemäßen Fahrzeugsitzanordnung.

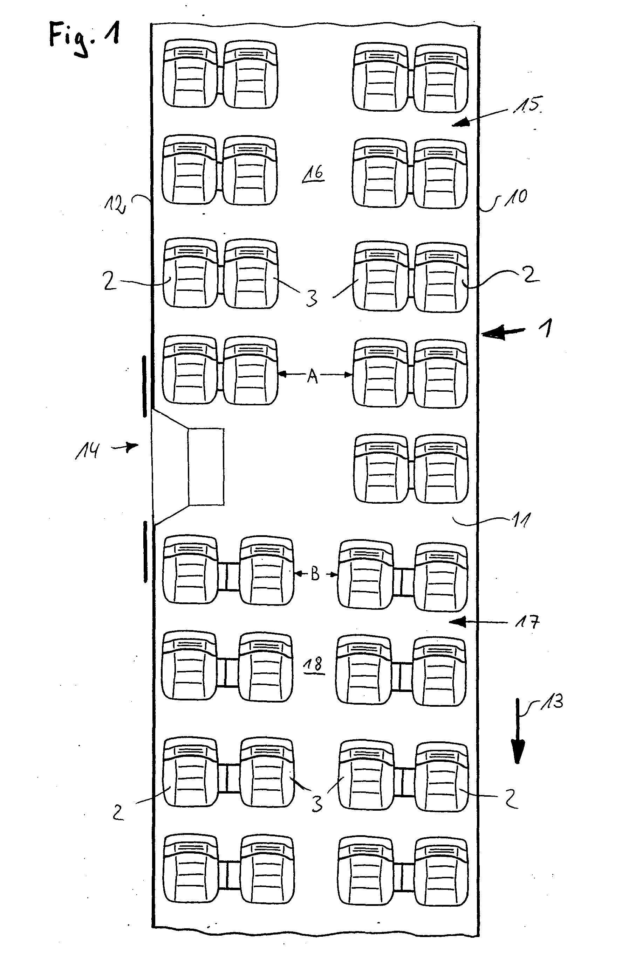

In Figur 1 ist ein Ausschnitt aus einer Sitzanordnung eines Fahrzeugs 1 zur Personenbeförderung gezeigt. Das Beispiel soll einen Omnibus darstellen; die erfindungsgemäße Fahrzeugsitzanordnung ist aber durchaus auch in andere Personentransporteinrichtungen, wie Schienenfahrzeuge oder Flugzeuge einbaubar.

Die Fahrzeugsitzanordnung besteht im gewählten Beispiel aus einer Mehrzahl von hintereinander angeordneten Sitzreihen, wobei jede Sitzreihe zwei zwischen sich einen Gang bestimmende, nebeneinander gelegene Sitzpaare umfaßt. Die den Fahrzeugseitenwänden 10, 12 benachbarten Sitze 2 sind bezüglich des Fahrzeugbodens 11 fest und die zum Mittelgang 16, 18 liegenden Sitze 3 sind seitlich, das heißt quer zur Fahrtrichtung 13 verschiebbar.

Im rückwärtigen Teil des Fahrzeugs 1 (in Figur 1 oben) ist eine erste Sitzanordnung 15 gezeigt, bei der die Sitze 2, 3 eine eng nebeneinander liegende Ein- und Ausstiegsstellung einnehmen. In dieser Stellung besitzt der Mittelgang 16 eine Breite A, die ein bequemes, sicheres und schnelles Ein- und Aussteigen der Fahrgäste zuläßt.

Im vorderen Fahrzeugteil (in Figur 1 unten) ist eine zweite Sitzanordnung 17 dargestellt, bei der die Sitze 3 zum Mittelgang hin verschoben sind, so daß zwischen den Sitzen 2, 3 eines jeden Sitzpaares ein großer seitlicher Abstand gebildet ist. In dieser Reisestellung der Sitzanordnung verbleibt zwischen den Sitzpaaren nur ein schmaler Mittelgang 18, dessen Breite B geringer ist als die Breite A des ersten Mittelgangs 16. In dieser Reisestellung besitzt jeder Sitz zwar eine ausreichend bequeme Ellbogenfreiheit, doch müssen sich die Fahrgäste unter Schwierigkeiten durch den Gang 18 zwängen.

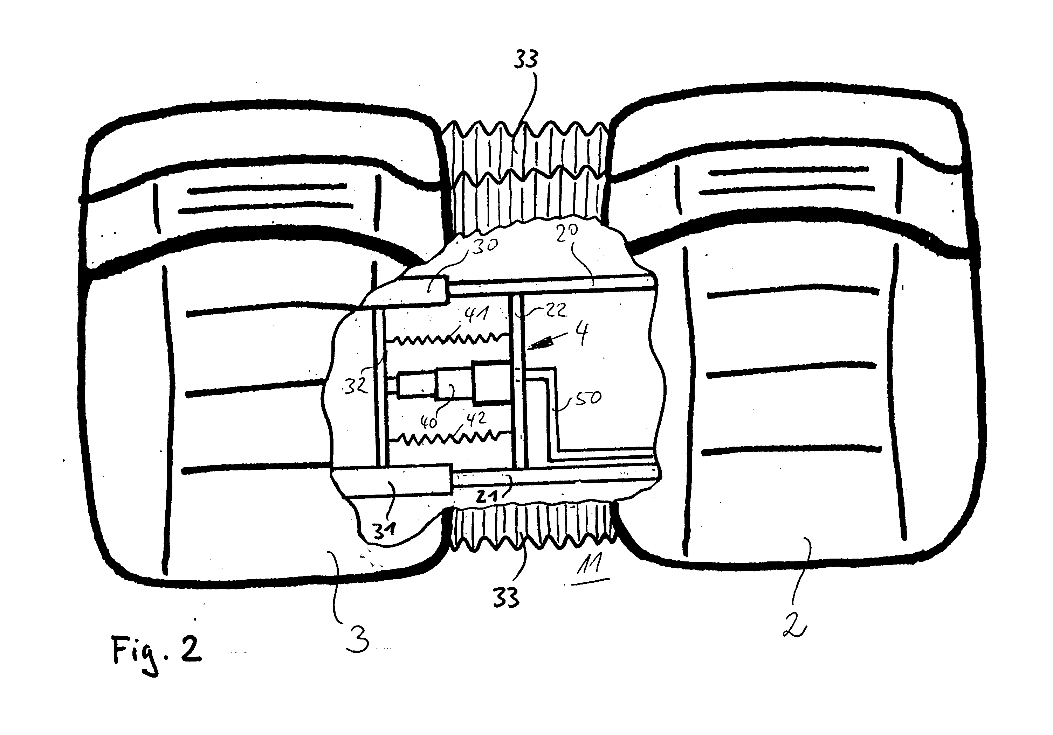

Zur seitlichen Verschiebung der mittelgangseitigen Sitze 3 ist eine Antriebseinrichtung 4 vorgesehen, die in Figur 2 dargestellt ist.

Der fest mit dem Fahrzeugboden 11 verbundene Sitz 2 ruht auf einem aus Querstreben 20, 21 sowie Längsstreben 22 bestehenden Untergestell, welches mit dem Fahrzeugboden 11 beispielsweise verschraubt ist. Die Querstreben 20, 21 erstrecken sich zur Fahrzeugmitte hin bis unter den gangseitigen verschiebbaren Sitz 3 und sind auch dort am Fahrzeugboden 11 abgestützt. Der verschiebbare Sitz 3 weist an seiner Unterseite zwei Querschienen 30, 31 auf, die auf den Querstreben 20, 21 verschiebbar gelagert sind. Die Querschienen 30, 31 sind über Längsstreben 32 miteinander verbunden und bilden so einen Tragrahmen für den verschiebbaren Sitz 3.

Zwischen einer Längsstrebe 22 des festen Sitzes 2 und einer Längsstrebe 32 des verschiebbaren Sitzes 3 ist eine Kolben-Zylinder-Einrichtung 40 angeordnet, die sich im wesentlichen parallel zu den Querstreben 20, 21 und den Querschienen 30, 31 erstreckt. Die Kolben-Zylinder-Anordnung 40 wird über eine Druckleitung 50 mit Druckfluid, beispielsweise Druckluft versorgt.

Weiterhin sind zwischen der Längsstrebe 22 des festen Sitzes 2 und der Längsstrebe 32 des verschiebbaren Sitzes 3 zwei Zugfedern 41, 42 angeordnet.

Zwischen dem festen Sitz 2 und dem verschiebbaren Sitz 3 ist eine elastische Abdeckung 33 vorgesehen, die den Zwischenraum zwischen den Sitzen 2, 3 zumindest im Sitzflächenbereich, vorzugsweise aber auch im Rückenlehnenbereich abdeckt. Durch die elastische Abdeckung 33 wird ein Eindringen von Gegenständen, wie zum Beispiel Handtaschen, oder von Körperteilen, wie zum Beispiel Händen, in den Zwischenraum verhindert und so einem Einklemmen von Körperteilen oder Gegenständen beim Zurückfahren des verschiebbaren Sitzes 3 vorgebeugt. Diese Abdeckung 33 kann beispielsweise von einem Faltenbalg aus Gummi oder einem ähnlichen Material gebildet sein und den Zwischenraum zwischen den Sitzflächen und gegebenenfalls den Lehnen beispielsweise nach oben, vorne und hinten abdecken.

Wird der Kolben-Zylinder-Anordnung 40 über die Druckleitung 50 Druckfluid zugeführt, so expandiert die Kolben-Zylinder-Anordnung und schiebt dabei den verschiebbaren Sitz 3 mit seinen Querschienen 30, 31 entlang der Querstreben 20, 21 des festen Sitzes 2 in Richtung zur Fahrzeugmitte. Dabei werden die Zugfedern 41, 42 gespannt. Solange der Druck in der Druckleitung 50 anliegt ist der verschiebbare Sitz 3 zur Fahrzeugmitte hin verschoben und nimmt so die Reisestellung ein. Fällt der Druck in der Druckleitung 50 unter einen Wert ab, der die von der Kolben-Zylinder-Anordnung erzeugte Kraft unter die Zugkraft der Federn 41, 42 sinken läßt, so ziehen die Federn 41, 42 den verschiebbaren Sitz 3 wieder zurück zum festen Sitz 2 hin.

Der dazu erforderliche Druckabfall in der Druckleitung 50 kann durch die Betätigung eines Steuerventils oder aber auch durch eine bei einem Unfall auftretende Beschädigung des Druckleitungssystems hervorgerufen werden. So wird auf einfach Weise gewährleistet, daß bei einem Unfall, bei dem beispielsweise die Druckluftversorgung des Fahrzeugs Schaden nimmt, die Sitze automatisch zurückgefahren werden und auf diese Weise ein für eine schnelle Fahrzeugevakuierung notwendiger breiter Mittelgang 16 entsteht. Um ein schlagartiges Zurückfahren der verschiebbaren Sitze 3 zu vermeiden, können an geeigneten Orten im Druckluftsystem Drosselventile vorgesehen sein.

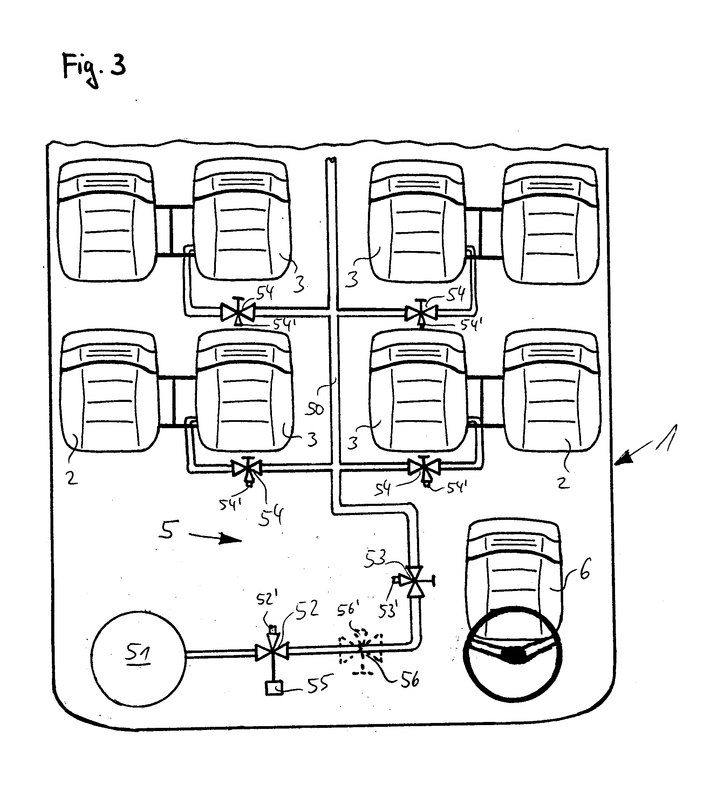

Die Steuerung der Sitzverstellung kann beispielsweise durch die in Figur 3 gezeigte Steuereinrichtung 5 erfolgen. Zwischen einem Druckbehälter 51 und den jeweiligen Kolben-Zylinder-Anordnungen 40 verläuft eine Druckleitung 50, die vorzugsweise im Heizkanal des Fahrzeugs verlegt ist. In der Druckleitung 50 sind eine Mehrzahl von Ventilen 52, 53 in Reihe geschaltet angeordnet. Die Ventile 52, 53, 54 sind dabei jeweils so ausgestaltet, daß das Ventil zwischen einer Durchgangsstellung, die die jeweils in Richtung der Kolben-Zylinder-Anordnungen 40 der einzelnen verschiebbaren Sitze 3 abgehende Druckleitung mit dem Druckbehälter 51 verbindet, und einer Abblasstellung, die die zu den jeweiligen Kolben-Zylinderanordnungen 40 der verschiebbaren Sitze 3 verlaufende Leitung mit Abblasöffnung 52', 53', 54' verbindet, umschaltbar sind.

Ein erstes Ventil 52 ist als erstes Ventil hinter dem Druckbehälter 51 angeordnet und wird von einem Unfallsensor 55 betätigt. Erfährt das Fahrzeug 1 bei einem Unfall einen signifikanten Stoß, so betätigt der Unfallsensor 55 das als automatische Notfallbetätigungseinrichtung wirkende erste Ventil 52 dergestalt, daß der in den zu den Kolben-Zylinder-Anordnungen 40 führenden Leitungen herrschende Druck beispielsweise durch Abblasen der Druckluft durch die Abblasöffnung 52' abgebaut wird und die verschiebbaren Sitze 3 wie vorbeschrieben von den Federn 41, 42 in die zurückgezogene Position verfahren werden.

Dem ersten Ventil 52 folgt in Durchflußrichtung ein zweites Ventil 53, das als zentrale Betätigungseinrichtung im Bereich des Fahrerplatzes 6 vorgesehen ist und dem Fahrer die zentrale Betätigung der Antriebseinrichtungen 4 erlaubt. Die Funktionsweise des zweiten Ventils 53 entspricht der des ersten Ventils 52.

Weiterhin ist jedem verschiebbaren Sitz 3 ein als individuelle Betätigungseinrichtung wirkendes drittes Ventil 54 zugeordnet, mit dem jeder Fahrgast wahlweise seinen Sitz zum Gang hin oder zum festen Sitz 2 hin verschieben kann, sofern die vorgeschalteten Ventile 52, 53 und gegebenenfalls 56 den Durchfluß des Druckmediums vom Druckbehälter 51 zum dritten Ventil 54 hin gestatten.

In Durchflußrichtung zwischen dem Druckfluidbehälter 51 und den dritten Ventilen 54 kann - im Fahrgastraum - zumindest ein als manuelle Notfallbetätigungseinrichtung dienendes viertes Ventil 56 vorgesehen sein, das in Figur 3 nur gestrichelt angedeutet ist, und das im Notfall von den Fahrgästen manuell ausgelöst werden kann. Die Funktionsweise ist dabei die gleiche wie bei den vorbeschriebenen Ventilen 52, 53, 54.

Die Sitzverschiebung kann außer durch die beschriebenen Kolben-Zylinder-Anordnungen 40 auch durch Hydraulikmotoren erfolgen, die auf die gleiche Weise wie die Kolben-Zylinder-Anordnungen 40 mit Druckfluid versorgt werden. Wird ein anderes Druckfluid als Druckluft verwendet, können anstelle der Abblasöffnungen 52', 53', 54', 56' der Ventile 52, 53, 54, 56 Rücklaufleitungen zu einem nicht gezeigten Druckfluid-Reservoir von den Ventilen 52, 63, 54, 56 abgehen.

Eine weitere Antriebsmöglichkeit für die Sitzverschiebung ist das Vorsehen von Elektromotoren als Antriebseinrichtungen 4, deren Stromversorgung von Schaltern unterbrechbar ist, die ebenso in Serie geschaltet sind wie die Ventile 52, 53, 54, 56.

Bei der Verwendung von Hydraulikmotoren oder Elektromotoren als Antriebseinrichtungen 4 kann anstelle der Zugfedern 41, 42 auch eine Umpolung der jeweiligen Motore vorgesehen sein, die ein Zurückverfahren der verfahrbaren Sitze 3 bewirkt. Auch bei der Verwendung einer Kolben-Zylinder-Anordnung als Antriebseinrichtung 4 kann auf die Federn 41, 42 verzichtet werden, wenn die Kolben-Zylinder-Anordnung doppelt wirkend ausgestaltet ist und zum Zurückverfahren des verfahrbaren Sitzes 3 umgepolt wird.

Anstelle eines Sitzpaares, bei dem ein fester Sitz 2 und ein verschiebbarer Sitz 3 vorgesehen ist, kann die Fahrzeugsitzanordnung auch drei oder mehr nebeneinander angeordnete Sitze aufweisen, bei denen die inneren Sitze bezüglich des Fahrzeugbodens fest sind und nur die äußeren, zu den an dieser Sitzgruppe vorbeiführenden Gängen gerichteten Sitze dieser Sitzgruppe verschiebbar sind. Diese Anordnung ist insbesondere für größere Fahrzeuge, beispielsweise Großraumflugzeuge, geeignet, die mehrere Gänge und dazwischenliegende Sitzgruppen aufweisen.

**Patentansprüche**

1. Fahrzeugsitzanordnung, insbesondere für Omnibusse, mit zumindest einer, jeweils aus zumindest zwei nebeneinanderliegenden Sitzen bestehenden Sitzreihe, wobei die nebeneinanderliegenden Sitze in Querrichtung relativ zueinander verschiebbar sind, dadurch **gekennzeichnet**,

daß für jeden verschiebbaren Sitz (3) eine Antriebseinrichtung (4) zur Betätigung der Querverschiebung vorgesehen ist.

2. Fahrzeugsitzanordnung nach Anspruch 1,
dadurch **gekennzeichnet**,
daß einer (2) der nebeneinanderliegenden Sitze (2, 3) bezüglich des Fahrzeugbodens (11) fest ist und daß der ihm seitlich benachbarte Sitz (3) bzw. die ihm beiderseits benachbarten Sitze in Querrichtung verschiebbar ist bzw. sind.

3. Fahrzeugsitzanordnung nach Anspruch 1 oder 2,
dadurch **gekennzeichnet**,
daß als Antriebseinrichtung eine Kolben-Zylinder-Einheit (40) zwischen den relativ zueinander verschiebbaren Sitzen (2, 3) vorgesehen ist, die mit einem Druckmedium, vorzugsweise Druckluft, beaufschlagbar ist.

4. Fahrzeugsitzanordnung nach Anspruch 2,
dadurch **gekennzeichnet**,
daß die Antriebseinrichtung (4) von einem Elektromotor beaufschlagt ist.

5. Fahrzeugsitzanordnung nach Anspruch 2,
dadurch **gekennzeichnet**,
daß die Antriebseinrichtung von einem Hydraulikmotor beaufschlagt ist.

6. Fahrzeugsitzanordnung nach einem der vorhergehenden Ansprüche,
dadurch **gekennzeichnet**,
daß zwischen den relativ zueinander verschiebbaren Sitzen (2, 3) zumindest eine Zugfeder (41; 42) vorgesehen ist, die bei auseinandergeschobenen Sitzen gespannt ist und die bei Ausfall der Antriebseinrichtung (4) die Sitze (2, 3) wieder aufeinanderzu verschiebt.

7. Fahrzeugsitzanordnung nach einem der vorhergehenden Ansprüche,
dadurch **gekennzeichnet**,
daß vorzugsweise im Bereich des Fahrerplatzes (6) des Fahrzeugs (1) zumindest eine zentrale Betätigungseinrichtung (53) für wenigstens eine Gruppe von Antriebseinrichtungen (4) vorgesehen ist.

8. Fahrzeugsitzanordnung nach einem der vorhergehenden Ansprüche,
dadurch **gekennzeichnet**,
daß jedem verschiebbaren Sitz (3) zugeordnet eine individuelle Betätigungseinrichtung (54) für die Antriebseinrichtung (4) dieses Sitzes (3) vorgesehen ist.

9. Fahrzeugsitzanordnung nach einem der vorhergehenden Ansprüche,
dadurch **gekennzeichnet**,
daß eine automatische Notfallbetätigungseinrichtung (52) vorgesehen ist, die im Falle eines Unfalls automatisch ein Aufeinanderzu-Verschieben aller relativ zueinander verschiebbaren Sitze (2, 3) bewirkt.

10. Fahrzeugsitzanordnung nach einem der vorhergehenden Ansprüche,
dadurch **gekennzeichnet**,
daß zumindest eine manuelle Notfallbetätigungseinrichtung (56) im Fahrgastraum vorgesehen ist, die ein Aufeinanderzu-Verschieben aller relativ zueinander verschiebbaren Sitze (2, 3) bewirkt.

11. Fahrzeugsitzanordnung nach einem der vorhergehenden Ansprüche,
dadurch **gekennzeichnet**,
daß die zentrale Betätigungseinrichtung (53) im Bereich des Fahrerplatzes (6) den individuellen Betätigungseinrichtungen (54) übergeordnet ist und daß gegebenenfalls vorgesehene Notfallbetätigungseinrichtungen (52; 56) der zentralen Betätigungseinrichtung (53) übergeordnet sind.

12. Fahrzeugsitzanordnung nach einem der Ansprüche 1 bis 11,
dadurch **gekennzeichnet**,
daß zwischen dem festen Sitz (2) und dem verschiebbaren Sitz (3) ein Eingreifschutz (33) vorgesehen ist.

13. Fahrzeugsitzanordnung nach Anspruch 12,
dadurch **gekennzeichnet**,
daß der Eingreifschutz (33) von einem Faltenbalg gebildet ist.

Fig. 1

Fig. 2

# Fig. 3